# EUROPEAN PATENT SPECIFICATION

(11) **EP 3 885 664 B1**
(45) Date of publication and mention of the grant of the patent: **26.04.2023**
(21) Application number: 18942669.5
(22) Date of filing: 12.12.2018
(51) Int. Cl.: F24F 11/63, F24F 11/48, F24F 110/10

(54) **AIR CONDITIONING CONTROL DEVICE AND AIR CONDITIONING CONTROL METHOD**
STEUERUNGSVORRICHTUNG FÜR EINE KLIMAANLAGE UND STEUERUNGSVERFAHREN FÜR EINE KLIMAANLAGE
DISPOSITIF ET PROCÉDÉ DE COMMANDE DE CLIMATISATION

(43) Date of publication of application: 29.09.2021
(73) Proprietor: Mitsubishi Electric Corporation, Tokyo 100-8310 (JP)
(72) Inventor: TAGUCHI, Naoki, Tokyo 1008310 (JP); MARIYAMA, Toshisada, Tokyo 1008310 (JP); NAMMOTO, Takashi, Tokyo 1008310 (JP); SATO, Yasushi, Tokyo 1008310 (JP)
(74) Representative: Pfenning, Meinig & Partner mbB
(86) International application number: PCT/JP2018/045683
(87) International publication number: WO 2020/121437

(56) References cited:
- EP-A1- 3 184 921
- EP-A1- 3 296 654
- WO-A1-2019/021675
- JP-A- 2003 140 708
- JP-A- 2003 141 499
- JP-A- 2017 172 830
- KR-B1- 101 261 199
- US-A1- 2015 371 149
- US-A1- 2018 283 723

## Description

### TECHNICAL FIELD

The present invention relates to an air conditioning control device that controls an air conditioner on the basis of a machine learning model.

### BACKGROUND ART

A technique of an air conditioning control device described in Patent Literature 1 is an example of a technique for controlling an air conditioner so as to perform air conditioning that is comfortable for a user while keeping down power consumption. The air conditioning control device associates room temperature history information indicating a history of a change in the room temperature with operation history information of the air conditioner, predicts, as a predicted off-time room temperature, the room temperature when the air conditioner does not perform temperature adjustment, on the basis of the pieces of information, and determines a control parameter for bringing the room temperature to a target temperature at a target time, on the basis of the predicted off-time room temperature.

More specifically, regarding the prediction of the predicted off-time room temperature as above, the air conditioning control device described in Patent Literature 1 uses machine learning to create an off-time room temperature predicting model for predicting the room temperature of a living space in the future when the air conditioner does not perform temperature adjustment, on the basis of the room temperature history information and the operation history information, and predicts the predicted off-time room temperature using the off-time room temperature predicting model.

### CITATION LIST

### PATENT LITERATURE

Patent Literature 1: Japanese Laid-Open Patent Application No. 2017-67427 JP 2017 172830 and JP 2003 141499 disclose an air conditioning control device as defined in the preamble portion of independent claim 1.

### SUMMARY OF INVENTION

### TECHNICAL PROBLEM

However, the creation of the off-time room temperature predicting model by the air conditioning control device described in Patent Literature 1 is based on the premise that there is sufficiently accumulated data on the room temperature history information and the operation history information. In general, the amount of data required for machine learning is enormous, and the air conditioning control device does not always hold in advance the amount of data required for machine learning. Moreover, there is a problem that it takes time for the air conditioning control device to collect the required data from the beginning.

The present invention has been made to solve the above problem, and aims to provide a technique that, in an air conditioning control device that controls an air conditioner on the basis of a machine learning model, can reduce temporal cost for collecting data used in machine learning.

### SOLUTION TO PROBLEM

The invention is defined by the independent claims. Preferable embodiments are defined by the dependent claims.
An air conditioning control device according to the present invention includes: an acquisition unit for acquiring air conditioning data acquired by an air conditioner, and a start time of the air conditioner predicted by inputting the air conditioning data into a machine learning model; an augmentation unit for generating augmented data by referring to the air conditioning data and the start time acquired by the acquisition unit; and an update unit for updating the machine learning model, by referring to the air conditioning data and the start time acquired by the acquisition unit as well as the augmented data generated by the augmentation unit, wherein the augmentation unit refers to air conditioning data for a period from the start time to a time when an environmental value of a room equipped with the air conditioner reaches a target value, treats a certain time within the period as a virtual start time, and treats the air conditioning data at the certain time as the air conditioning data at the virtual start time, thereby generating augmented data of the air conditioning data corresponding to the start time.

### ADVANTAGEOUS EFFECTS OF INVENTION

According to the present invention, in the air conditioning control device that controls the air conditioner on the basis of machine learning, it is possible to reduce the temporal cost for collecting the data used in machine learning.

### BRIEF DESCRIPTION OF DRAWINGS

FIG. 1 is a block diagram illustrating a configuration of an air conditioning control system according to a first embodiment of the iinvention.
FIG. 2 is a block diagram illustrating a configuration of an air conditioning control device according to the first embodiment.
FIG. 3 is a flowchart illustrating a required time predicting method in an air conditioning control method according to the first embodiment.
FIG. 4 is a flowchart illustrating an augmented data generating method and a machine learning model updating method in the air conditioning control method according to the first embodiment.
FIG. 5 is a graph for explaining a first specific example of the augmented data generating method in the air conditioning control method according to the first embodiment.
FIG. 6 is a graph for explaining in more detail the first specific example of the augmented data generating method in the air conditioning control method according to the first embodiment.
FIG. 7 is a graph for explaining a second specific example of the augmented data generating method in the air conditioning control method as an example to understand the present application.
FIG. 8 is a graph for explaining in more detail the second specific example of the augmented data generating method in the air conditioning as an example to understand the present application.
FIG. 9 is a graph for explaining a result of air conditioning control by the air conditioning control device according to the first embodiment.
FIG. 10 is a block diagram illustrating a configuration of an air conditioning control device according to a second embodiment embodiment of the invention.
FIG. 11 is a flowchart illustrating an augmented data generating method and a machine learning model updating method in an air conditioning control method according to the second embodiment.
FIG. 12 is a diagram for explaining a specific example of an augmented data replacing method in the air conditioning control method according to the second embodiment.
FIG. 13 is a flowchart illustrating a start time predicting method in an air conditioning control method according to a third embodiment of the invention.
FIG. 14 is a flowchart illustrating an augmented data generating method and a machine learning model updating method in the air conditioning control method according to the third embodiment.
FIG. 15 is a diagram for explaining a specific example in which an air conditioning control device according to the third embodiment predicts a required time using a neural network model.
FIG. 16 is a flowchart illustrating a start time predicting method in an air conditioning control method according to a fourth embodiment of the invention.
FIG. 17 is a flowchart illustrating an augmented data generating method and a machine learning model updating method in the air conditioning control method according to the fourth embodiment.
FIG. 18A is a block diagram illustrating a configuration of hardware that implements functions of the air conditioning control devices according to the first to fourth embodiments. FIG. 18B is a block diagram illustrating a configuration of hardware that executes software for implementing the functions of the air conditioning control devices according to the first to fourth embodiments.

### DESCRIPTION OF EMBODIMENTS

Embodiments for carrying out the present invention will now be described with reference to the drawings in order to describe the present invention in more detail.

### First Embodiment.

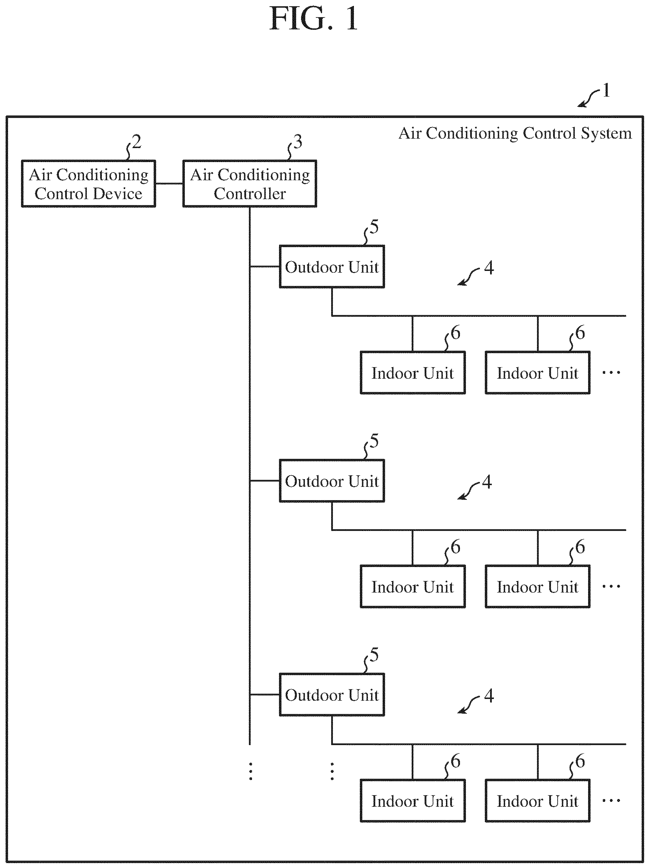

FIG. 1 is a block diagram illustrating a configuration of an air conditioning control system 1 according to a first embodiment. As illustrated in FIG. 1, the air conditioning control system 1 includes an air conditioning control device 2, an air conditioning controller 3, a plurality of outdoor units 5, and a plurality of indoor units 6. Note that the configuration illustrated in FIG. 1 is an example, and the number of units of each device or the like in the air conditioning control system 1 according to the present embodiment is not limited to the number of units of each device in this example.

Each of the outdoor units 5 is connected to a plurality of the indoor units 6, and forms an air conditioner 4 together with the indoor units 6, the air conditioner 4 performing air conditioning of a room. Each outdoor unit 5 includes a sensor that acquires environmental information on the outdoors where the corresponding outdoor unit 5 is installed. Each outdoor unit 5 outputs the acquired environmental information, as air conditioning data, to the air conditioning controller 3. Note that examples of the environmental information include hourly outdoor temperature and outdoor humidity.

Each indoor unit 6 includes a sensor that acquires environmental information on the inside of a room where the corresponding indoor unit 6 is installed. Each indoor unit 6 further includes a reception unit that receives setting information from a user. Each indoor unit 6 outputs the acquired environmental information, the received setting information, and operation information indicating an operating state of the corresponding air conditioner 4, as air conditioning data, to the air conditioning controller 3 via the corresponding outdoor unit 5. Note that examples of the environmental information include hourly indoor temperature and indoor humidity. The setting information includes at least a target time at which an environmental value of the room equipped with the indoor unit 6 reaches a target value, and other examples of the setting information include a target temperature and a target humidity set by a user. Examples of the operation information include information related to starting and stopping of the air conditioner 4, and operation modes of the air conditioner 4 including a cooling mode, a heating mode, and a dehumidification mode.

The air conditioning controller 3 is a controller that performs centralized control on the plurality of outdoor units 5 and the plurality of indoor units 6. The air conditioning controller 3 acquires the air conditioning data from the outdoor units 5 and the indoor units 6. The air conditioning controller 3 transmits, to the air conditioning control device 2, the air conditioning data being the aggregation of the air conditioning data acquired from the plurality of outdoor units 5 and the plurality of indoor units 6.

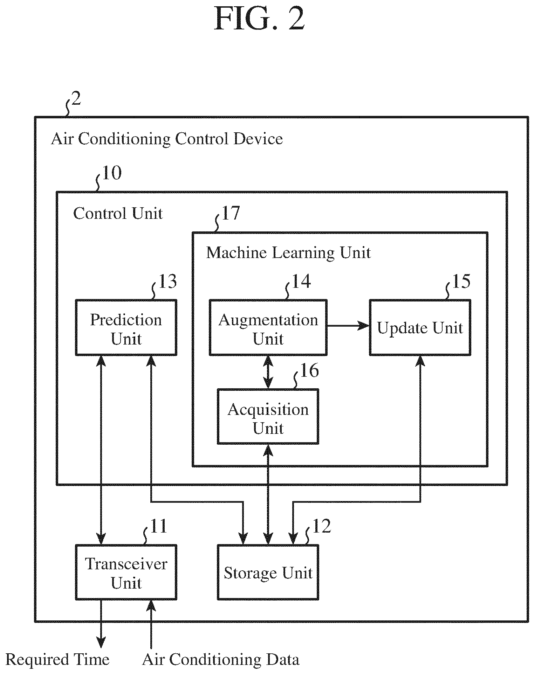

FIG. 2 is a block diagram illustrating the configuration of the air conditioning control device 2 in more detail than in FIG. 1. As illustrated in FIG. 2, the air conditioning control device 2 includes a control unit 10, a transceiver unit 11, and a storage unit 12. The control unit 10 includes a prediction unit 13 and a machine learning unit 17. The machine learning unit 17 includes an augmentation unit 14, an update unit 15, and an acquisition unit 16.

The transceiver unit 11 receives the air conditioning data from the air conditioning controller 3. The transceiver unit 11 outputs the received air conditioning data to the prediction unit 13.

The prediction unit 13 acquires the air conditioning data via the transceiver unit 11. The prediction unit 13 also reads a machine learning model stored in advance in the storage unit 12 from the storage unit 12. The prediction unit 13 inputs the acquired air conditioning data into the machine learning model, and predicts the time required for an environmental value of a room to reach a target value at a target time after the air conditioner 4 is started (hereinafter simply referred to as a "required time" as well). Note that the environmental value of the room can be the indoor temperature, indoor humidity described above, or the like. The target value can be the target temperature, target humidity described above, or the like. The prediction unit 13 outputs the predicted required time to the air conditioning controller 3 via the transceiver unit 11. The air conditioning controller 3 determines a start time of the air conditioner 4 required for the environmental value of the room to reach the target value, from the required time and the target time as above, and controls the air conditioner 4 to start at the start time. The prediction unit 13 also stores, in the storage unit 12, the start time based on the predicted required time and the used air conditioning data in association with each other.

Note that although the present embodiment describes the configuration in which the air conditioning controller 3 determines the start time and controls to start the air conditioner 4 at the start time, the present embodiment also includes a configuration in which the air conditioning control device 2 includes these functions. In that case, the air conditioning control device 2 further includes a start unit that determines the start time of the air conditioner 4 required for the environmental value of the room to reach the target value, from the required time and the target time, and that controls the air conditioner 4 to start at the start time. In the present embodiment, the start time of the air conditioner 4 described above is a numerical value simply obtained from the required time and the target time as above, so that predicting the required time is virtually synonymous with predicting the start time of the air conditioner 4. That is, the expression "predicting the start time" is assumed to include predicting the required time.

The acquisition unit 16 acquires the air conditioning data acquired by the air conditioner 4, and the start time of the air conditioner 4 predicted by inputting the air conditioning data into the machine learning model. The acquisition unit 16 reads the air conditioning data and the start time stored in advance in the storage unit 12 from the storage unit 12.

The augmentation unit 14 generates augmented data by referring to the air conditioning data and the start time acquired by the acquisition unit 16. The augmentation unit 14 outputs the generated augmented data to the update unit 15. The augmentation unit 14 also stores the generated augmented data in the storage unit 12 via the acquisition unit 16. A specific example of a method of generating the augmented data by the augmentation unit 14 will be described later.

The update unit 15 updates the machine learning model, by referring to the air conditioning data and the start time acquired by the acquisition unit 16 as well as the augmented data generated by the augmentation unit 14. The update unit 15 stores the updated machine learning model in the storage unit 12.

Next, the operation of the air conditioning control device 2 will be described by referring to the drawings.

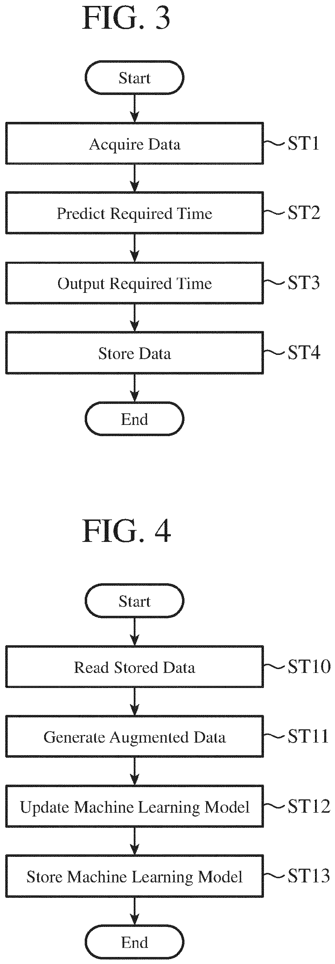

FIG. 3 is a flowchart illustrating a start time predicting method in an air conditioning control method by the air conditioning control device 2 according to the first embodiment. FIG. 4 is a flowchart illustrating an augmented data generating method and a machine learning model updating method in the air conditioning control method according to the first embodiment.

First, the flowchart of FIG. 3 will be described. The prediction unit 13 acquires air conditioning data via the transceiver unit 11 (step ST1). The prediction unit 13 also reads a machine learning model stored in advance from the storage unit 12. For example, in step ST1, the prediction unit 13 acquires, as the air conditioning data, an indoor temperature, an outdoor temperature, and a target temperature via the transceiver unit 11. The prediction unit 13 then calculates a "difference between the indoor temperature and the target temperature" and a "difference between the indoor temperature and the outdoor temperature".

Next, the prediction unit 13 predicts a required time by inputting the acquired air conditioning data into the machine learning model that has been read (step ST2). The air conditioning data that is input into the machine learning model by the prediction unit 13 for predicting the required time may be the acquired air conditioning data itself, or may be data obtained by processing the air conditioning data. For example, in step ST2, the prediction unit 13 predicts the required time, by inputting, into the machine learning model that has been read, the "difference between the indoor temperature and the target temperature" and the "difference between the indoor temperature and the outdoor temperature" that haven been calculated. That is, the "air conditioning data" input into the machine learning model includes the air conditioning data itself or the data obtained by processing the air conditioning data.

Next, the prediction unit 13 outputs the predicted required time to the air conditioning controller 3 via the transceiver unit 11 (step ST3). After acquiring the required time, the air conditioning controller 3 determines a start time of the air conditioner 4 required for an environmental value of a room to reach a target value, from the required time predicted by the prediction unit 13 and a target time indicated by the air conditioning data, and controls the air conditioner 4 to start at the start time. For example, the air conditioning controller 3 determines the start time of the air conditioner 4required for the temperature of the room to reach the target temperature, from the required time and the target time, and controls the air conditioner 4 to start at the start time.

Next, the prediction unit 13 stores, in the storage unit 12, the start time determined by the air conditioning controller 3 and the air conditioning data in association with each other (step ST4). The air conditioning data stored in the storage unit 12 by the prediction unit 13 includes the air conditioning data for a period from the time when the air conditioning data input into the machine learning model is acquired to the time when the target temperature or target humidity is reached after the start time. The air conditioning data for the period stored in the storage unit 12 is the data actually acquired by the sensor of the indoor unit 6 and the sensor of the outdoor unit 5. Hereinafter, the data actually acquired by the sensor of the indoor unit 6 and the sensor of the outdoor unit 5 will be referred to as "actual data". For example, in step ST4, the prediction unit 13 stores the start time, and the indoor temperature and the outdoor temperature during the above period, in association with one another in the storage unit 12. The prediction unit 13 can acquire the start time and the air conditioning data for the above period from the air conditioning controller 3 via the transceiver unit 11.

Next, the flowchart of FIG. 4 will be described.

The acquisition unit 16 reads the air conditioning data and the start time that are stored in the storage unit 12 by the prediction unit 13 in step ST4 described above (step ST10). For example, in step ST10, the acquisition unit 16 reads the start time and the indoor temperature and outdoor temperature associated therewith that are stored in the storage unit 12.

Next, the augmentation unit 14 generates augmented data, by referring to the air conditioning data and the start time acquired by the acquisition unit 16 (step ST11). The augmentation unit 14 outputs the generated augmented data to the update unit 15. For example, in step ST11, the augmentation unit 14 augments the number of pieces of data of the air conditioning data and of the start time acquired by the acquisition unit 16, by an amount required for machine learning. As for an example of a method of augmentation, the augmentation unit 14 augments the number of pieces of data, by adding a certain numerical value to each of a numerical value of the air conditioning data and a numerical value of the start time.

Next, the update unit 15 reads the machine learning model stored in advance in the storage unit 12, and updates the machine learning model by referring to the air conditioning data and the start time acquired by the acquisition unit 16 as well as the augmented data generated by the augmentation unit 14 (step ST12). For example, in step ST12, the update unit 15 updates the machine learning model, by referring to the indoor temperature, the outdoor temperature, and the start time acquired by the acquisition unit 16 as well as the augmented data thereof.

Next, the update unit 15 stores the updated machine learning model in the storage unit 12 (step ST13).

Next, a specific example of the augmented data generating method in step ST11 as above will be described by referring to the drawings.

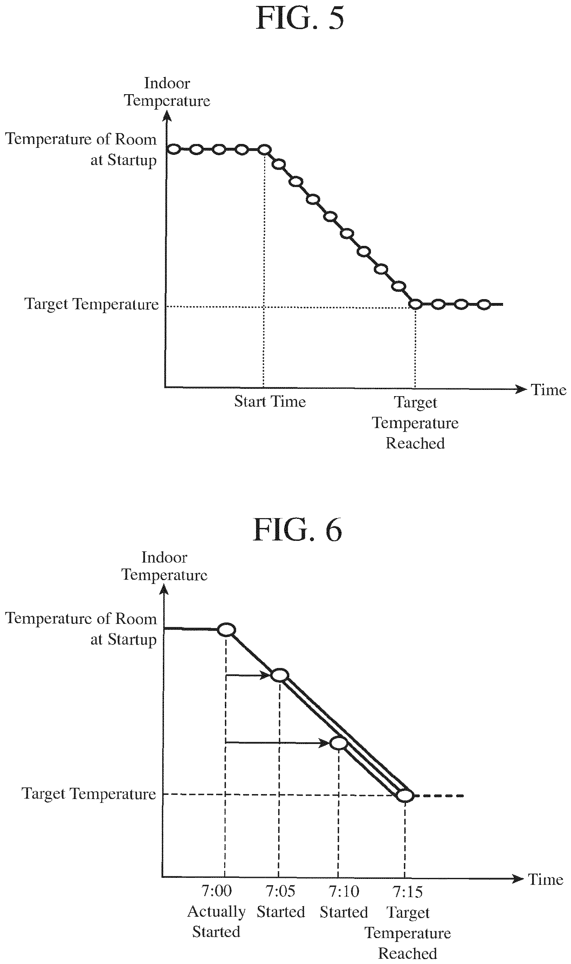

FIGS. 5 and 6 are each a graph for explaining a first specific example of the augmented data generating method in the air conditioning control method by the air conditioning control device 2 according to the first embodiment. In the graphs of FIGS. 5 and 6, a vertical axis represents the indoor temperature, and a horizontal axis represents the time.

More specifically, FIG. 5 is a temperature change graph of the indoor temperature acquired by the sensor of the indoor unit 6, and each data on the graph is obtained by the air conditioning control device 2 monitoring the indoor temperature at a regular time interval. Note that there is an outdoor temperature as a sensor value corresponding in time to each of the indoor temperatures obtained at regular time intervals that are indicated by a plurality of points on the graph of FIG. 5. In step ST4 described above, at a regular time interval, the prediction unit 13 stores the indoor temperature and the outdoor temperature at each time, as one record of the air conditioning data, in the storage unit 12.

When the air conditioner 4 is set to the cooling mode, as illustrated in FIG. 5, the indoor temperature continues to decrease after the air conditioner 4 is started at the start time. Once the indoor temperature reaches a target temperature, the air conditioning control device 2 causes the air conditioner 4 to stop via the air conditioning controller 3. Data for such an operation includes a series of air conditioning data containing a plurality of records from the start of the air conditioner 4 to the reaching of the target temperature. However, there is only one data set as a data set corresponding to one start time and the air conditioning data input into the machine learning model for predicting the required time used to determine the one start time, and the data set alone is insufficient as the data used by the update unit 15 to update the machine learning model in step ST12 as above. Therefore, in step ST11 as above, the augmentation unit 14 generates the augmented data, by referring to the air conditioning data and the start time read from the storage unit 12 by the acquisition unit 16.

FIG. 6 is a graph for more specifically describing the augmented data generating method. In FIG. 6, the leftmost point corresponding to the actual start time on the horizontal axis and the indoor temperature at startup on the vertical axis indicates the data stored in the storage unit 12 by the prediction unit 13 in step ST4.

In step ST11, the augmentation unit 14 generates the augmented data, by treating the air conditioning data at a time different from the start time as the air conditioning data at a virtual start time. More specifically, in step ST11, the augmentation unit 14 refers to a series of air conditioning data for a period from when the air conditioner 4 is actually started to when the indoor temperature reaches the target temperature, treats a certain time within the period as the virtual start time, and treats the air conditioning data at the certain time as the air conditioning data at the virtual start time. Next, the augmentation unit 14 generates the augmented data, by assuming that the indoor temperature changes along the graph as illustrated in FIG. 5 regardless of the start time and that, when the air conditioner 4 is started at the virtual start time, the indoor temperature reaches the target temperature at the same time as the time at which the target temperature is actually reached as in the case where the air conditioner 4 is started at the actual start time. More specifically, the augmentation unit 14 calculates the required time from the virtual start time to the time at which the target temperature is reached on the basis of a difference between the actual start time and the virtual start time.

Referring to FIG. 6, the air conditioning data at the start time when the air conditioning controller 3 actually starts the air conditioner 4 in step ST3 as above is the air conditioning data at the start time of 7:00. However, the augmentation unit 14 generates the augmented data, by treating each of the air conditioning data at 7:05 and the air conditioning data at 7:10 on the graph as the air conditioning data at the virtual start time, and by assuming that the indoor temperature has reached the target temperature at 7:15 in the case where it is assumed that the air conditioner 4 is started at each of the three start times. More specifically, the augmentation unit 14 generates the augmented data, by calculating the required time from the virtual start time of 7:05 or 7:10 to 7:15 on the basis of a difference between the actual start time of 7:00 and the virtual start time of 7:05 or 7:10. That is, the data set after the augmentation is as follows.

Actual data: a data set including the actual start time of 7:00, the air conditioning data at the actual start time, and the required time of 15 minutes from the actual start time to the time at which the target temperature is reached

First augmented data: a data set including the virtual start time of 7:05, the air conditioning data at the virtual start time, and the required time of 10 minutes from the virtual start time to the time at which the target temperature is reached
Second augmented data: a data set including the virtual start time of 7: 10, the air conditioning data at the virtual start time, and the required time of five minutes from the virtual start time to the time at which the target temperature is reached

In the above example, originally only one data set including the air conditioning data at the start of the air conditioner and the required time can be augmented to three data sets. Thus, in the first specific example, the augmented data is generated in consideration of the knowledge on the indoor temperature change by air conditioning, so that the number of training data can be augmented as compared with a case where only the actual data is used as the training data, and thus the temporal cost for collecting the training data can be reduced.

Next, a second specific example of the augmented data generating method in step ST11 as above will be described by referring to the drawings.

In the first specific example of the augmented data generating method above, the augmentation unit 14 augments the number of the training data, by referring to the air conditioning data, treating a certain time as the virtual start time, and treating the air conditioning data at the certain time as the air conditioning data at the virtual start time. However, even in such a specific example, there is a limit to the number by which the number of data can be augmented. Therefore, in the specific example described below, the number of the training data is augmented by augmenting the indoor temperature change graph as illustrated in FIG. 5.

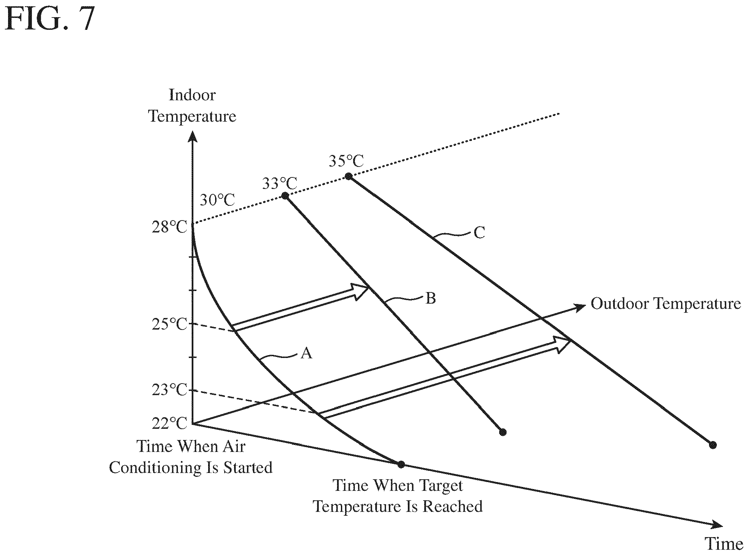

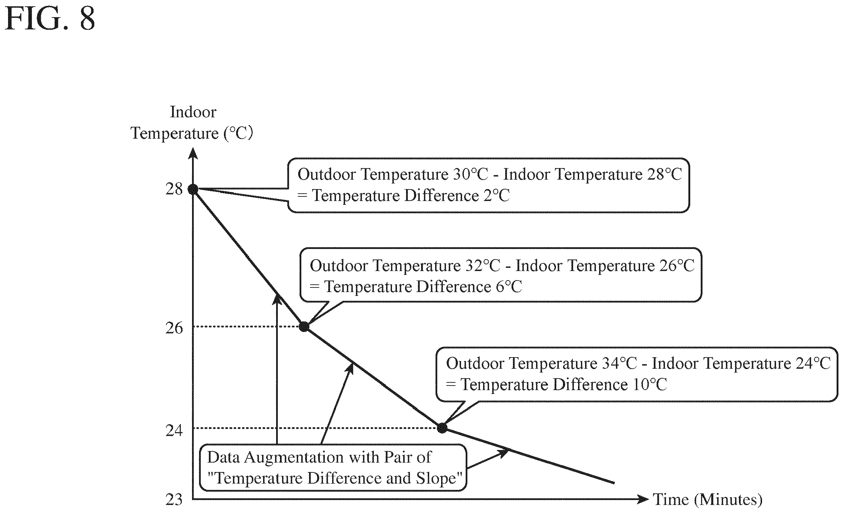

FIG. 7 is a graph for explaining the second specific example of the augmented data generating method in the air conditioning control method as an example to understand the present application. The graph of FIG. 7 is a three-dimensional graph with a first axis representing the indoor temperature, a second axis representing the time, and a third axis representing the outdoor temperature.
Graph A of FIG. 7 is a temperature change
graph of the indoor temperature actually acquired by the sensor of the indoor unit 6 and the outdoor temperature actually acquired by the sensor of the outdoor unit 5, and each data on the graph is obtained by the air conditioning control device 2 monitoring the indoor temperature and the outdoor temperature at a regular time interval. Similar to graph A illustrated in FIG. 7, FIG. 8 is a temperature change graph of the indoor temperature actually acquired by the sensor of the indoor unit 6 and the outdoor temperature actually acquired by the sensor of the outdoor unit 5.

Generally, a time-temperature change graph for a room that is air conditioned by the air conditioner 4 has a variable slope when a difference between the indoor temperature and the outdoor temperature is varied, and the slope of the graph is determined by the difference between the indoor temperature and the outdoor temperature. Taking the graph of FIG. 8 as an example, the outdoor temperature increases with time, and the indoor temperature decreases with time because the operation mode of the air conditioner 4 is the cooling mode. As a result, the difference between the indoor temperature and the outdoor temperature increases with time. The larger the difference is, the harder it is for the room to be cooled, and thus the slope of the temperature change graph of the room becomes less steep with time.

The second specific example of the augmented data generating method according to the present embodiment takes into consideration the knowledge on air conditioning as described above. First, in step ST11 as above, the augmentation unit 14 refers to a series of air conditioning data from when the air conditioner 4 is actually started to when the indoor temperature reaches the target temperature, calculates a "difference between the indoor temperature and the outdoor temperature" and a "slope of the temperature change graph of the indoor temperature" at that time for each time, and associates them with each other. Next, the augmentation unit 14 treats the "slope of the temperature change graph of the indoor temperature" corresponding to the calculated "difference between the indoor temperature and the outdoor temperature" as a "slope of the temperature change graph of the indoor temperature" corresponding to a virtual "difference between the indoor temperature and the outdoor temperature", thereby generating a linear model of the slope.

More specifically, taking the graph of FIG. 7 as an example, the augmentation unit 14 calculates a difference between the outdoor temperature of 30°C and the indoor temperature of 25°C on graph A, which is the actual data, and a slope of graph A when the indoor temperature is 25°C, and associates them with each other. Next, the augmentation unit 14 generates a linear model B, by treating the slope as a "slope of the temperature change graph of the indoor temperature" corresponding to a virtual "difference between the outdoor temperature and the indoor temperature" of 5°C. In the linear model B, the outdoor temperature is 33°C and the indoor temperature is 28°C at the start time, and a "difference between the outdoor temperature and the indoor temperature" is equal to the virtual "difference between the outdoor temperature and the indoor temperature" of 5°C. The linear model B has linearity with the slope corresponding to the virtual "difference between the outdoor temperature and the indoor temperature" of 5°C.

Moreover, the augmentation unit 14 calculates a difference between the outdoor temperature of 30°C and the indoor temperature of 23°C on graph A, which is the actual data, and a slope of graph A when the indoor temperature is 23°C, and associates them with each other. Next, the augmentation unit 14 generates a linear model C, by treating the slope as a "slope of the temperature change graph of the indoor temperature" corresponding to a virtual "difference between the outdoor temperature and the indoor temperature" of 7°C. In the linear model C, the outdoor temperature is 35°C and the indoor temperature is 28°C at the start time, and a "difference between the outdoor temperature and the indoor temperature" is equal to the virtual "difference between the outdoor temperature and the indoor temperature" of 7°C. The linear model C has linearity with the slope corresponding to the virtual "difference between the outdoor temperature and the indoor temperature" of 7°C.

Note that the augmented data generating method of the second specific example described above may be executed in combination with the augmented data generating method of the first specific example. As a result, the number of the training data can be significantly augmented as compared with the case where only the actual data is used as the training data, and thus the temporal cost for collecting the training data can be reduced.

Next, a specific example of a result of air conditioning control by the air conditioning control device 2 according to the first embodiment will be described by referring to the drawing.

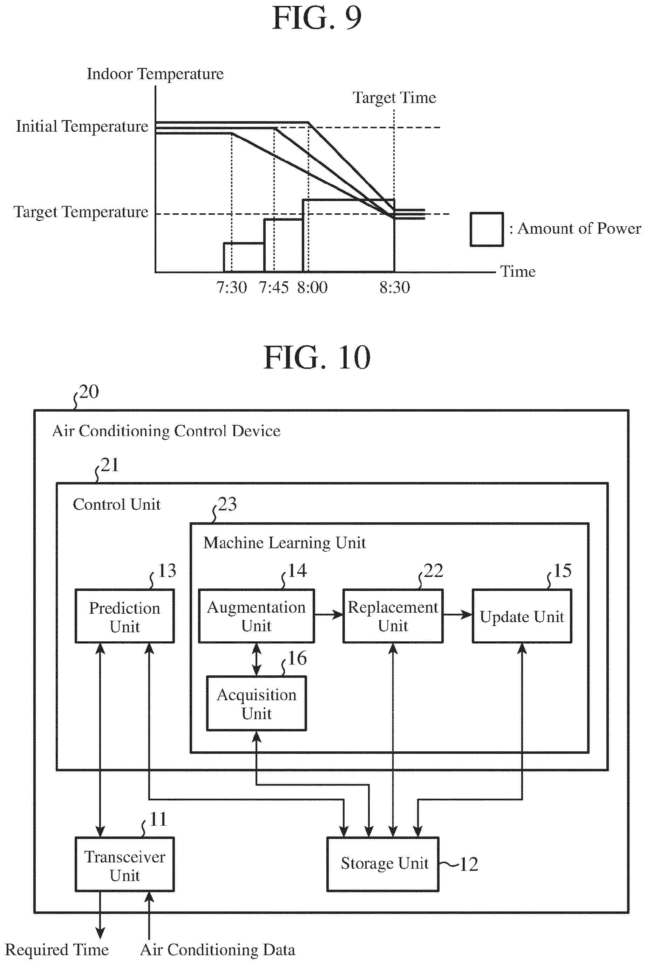

FIG. 9 is a graph for explaining a result of the air conditioning control by the air conditioning control device 2 according to the first embodiment. In the graph of FIG. 9, a vertical axis represents the indoor temperature, and a horizontal axis represents the time. Three solid lines represent temperature change graphs for respective rooms each with a single unit of the indoor unit 6 installed. Note that in the specific example, it is assumed that each of the plurality of indoor units 6 forms the air conditioner 4 together with the outdoor unit 5.

First, for the first room, in step ST1 as above, the prediction unit 13 acquires, as air conditioning data, an indoor temperature of the room, an outdoor temperature, and a target temperature. Next, in step ST2, the prediction unit 13 calculates a "difference between the indoor temperature and the target temperature" and a "difference between the indoor temperature and the outdoor temperature" on the basis of the acquired air conditioning data, and predicts a required time by inputting the air conditioning data as a result of the calculation into the machine learning model. Next, in step ST3, the prediction unit 13 outputs the predicted required time to the air conditioning controller 3 via the transceiver unit 11. The air conditioning controller 3 determines the start time of the air conditioner 4, which is required for the indoor temperature of the room to reach the target temperature, to be 7:30, from the required time predicted by the prediction unit 13 and a target time indicated by the air conditioning data, and controls the air conditioner 4 to start at the start time.

The air conditioning control device 2 executes each of the above steps for the other rooms to determine the start time of the air conditioner 4 installed in the second room to be 7:45 and the start time of the air conditioner 4 installed in the third room to be 8:00, thereby controlling the air conditioner 4 in each room. Next, as illustrated in FIG. 9, once the indoor temperature of each room has reached the target temperature at 8:30, the air conditioning control device 2 stops each air conditioner 4. A bar graph in FIG. 9 illustrates the amount of power consumed by the three air conditioners 4. As illustrated by the bar graph in FIG. 9, the amount of power consumption is gradually increased depending on the start time of each indoor unit. The reason for such a gradual increase in the amount of power consumption is that the number of the indoor units 6 in operation increases with time since the start times of the plurality of the indoor units 6 are different. The reason for the start times of the plurality of the indoor units 6 being different is that the air conditioning control device 2 predicts the start time of each air conditioner 4 by referring to the machine learning model based on the air conditioning data that reflects the environment in which each indoor unit 6 is installed such as a difference in the size of the room. The air conditioning control device 2 can reduce the peak power by distributing the amount of power consumption in such a way.

As described above, the air conditioning control device 2 according to the first embodiment includes the acquisition unit 16 that acquires the air conditioning data acquired by the air conditioner 4 and the start time of the air conditioner 4 predicted by inputting the air conditioning data into the machine learning model, the augmentation unit 14 that generates the augmented data by referring to the air conditioning data and the start time acquired by the acquisition unit 16, and the update unit 15 that updates the machine learning model by referring to the air conditioning data and the start time acquired by the acquisition unit 16 and the augmented data generated by the augmentation unit 14.

According to the above configuration, instead of using the air conditioning data of only the actual data acquired for use in machine learning as it is for learning, the number of training data can be augmented by generating the augmented data on the basis of the air conditioning data, and the machine learning model is updated by further using the augmented data. As a result, the temporal cost for collecting the data used in machine learning can be reduced.

According to one aspect of the first embodiment, in the air conditioning control device 2, the acquisition unit 16 may acquire, as the air conditioning data, at least the indoor temperature of the room equipped with the indoor unit 6 of the air conditioner 4, and may acquire, as the start time, the start time that is predicted as the start time required for the indoor temperature to reach the target temperature at the target time.

According to the above configuration, the augmented data of the start time and the indoor temperature is generated, and the machine learning model is updated by further using the augmented data. As a result, the temporal cost for collecting the data of the start time and the indoor temperature used in machine learning can be reduced.

According to one aspect of the first embodiment, in the air conditioning control device 2, the augmentation unit 14 may refer to the air conditioning data for a period from the start time to the time when the environmental value of the room equipped with the air conditioner 4 reaches the target value, treat a certain time within the period as a virtual start time, and treat the air conditioning data at the certain time as the air conditioning data at the virtual start time, thereby generating the augmented data of the air conditioning data corresponding to the start time.

According to the above configuration, the air conditioning data corresponding to the start time can be augmented, and the temporal cost for collecting the data can be reduced.

According to one aspect of the first embodiment, in the air conditioning control device 2, the acquisition unit 16 may acquire, as the air conditioning data, an indoor environmental value of the room in which the indoor unit 6 of the air conditioner 4 is installed and an outdoor environmental value of the outdoors where the outdoor unit 5 of the air conditioner 4 is installed, and the augmentation unit 14 may refer to the indoor environmental value and the outdoor environmental value for a period from the start time to the time when the indoor environmental value reaches the target value, calculate a difference between the indoor environmental value and the outdoor environmental value and a slope of an indoor environmental value change graph at a certain time within the period, and generate a linear model with the slope associated with the difference, as the augmented data of the indoor environmental value change graph.

According to the above configuration, the indoor environmental value change graph associated with the difference between the indoor environmental value and the outdoor environmental value can be augmented, and the temporal cost for collecting the data of the graph can be reduced.

According to one aspect of the embodiment, the air conditioning control device 2 may further include the prediction unit 13 that predicts the start time of the air conditioner 4 by inputting the air conditioning data into the machine learning model, and the air conditioner 4 may be started at the start time predicted by the prediction unit 13.

According to the above configuration, the start time can be predicted from the machine learning model further based on the augmented data, and the air conditioner can be started at the start time.

### Second Embodiment.

The first embodiment as above has described that the augmentation unit 14 generates the augmented data by referring to the air conditioning data and the start time. However, the augmented data is less reliable than the air conditioning data that is the actual data. Therefore, the use of the augmented data that can be noise needs to be minimized. A main purpose of a second embodiment is to solve such a problem.

The second embodiment will be described below by referring to the drawings. Note that a configuration having a similar function to the configuration described in the first embodiment is assigned the same reference numeral as that assigned to the configuration in the first embodiment, and the description thereof will be omitted.

FIG. 10 is a block diagram illustrating a configuration of an air conditioning control device 20 according to the second embodiment. As illustrated in FIG. 10, in addition to the configurations of the air conditioning control device 2 according to the first embodiment, the air conditioning control device 20 further includes a replacement unit 22 in the machine learning unit 23 of the control unit 21.

The replacement unit 22 acquires, from the augmentation unit 14 or the storage unit 12, the air conditioning data being the actual data used by the augmentation unit 14 to generate the augmented data and the augmented data generated by the augmentation unit 14, compares the air conditioning data with the augmented data, and replaces the augmented data with air conditioning data on the basis of a result of the comparison. More specifically, the replacement unit 22 compares the air conditioning data with the augmented data, and replaces the augmented data similar to the air conditioning data with the air conditioning data. The replacement unit 22 outputs, to the update unit 15, the air conditioning data including the air conditioning data that has replaced the augmented data, and the augmented data that has not been replaced.

Next, the operation of the air conditioning control device 20 according to the second embodiment will be described by referring to the drawing. Note that a start time predicting method according to the second embodiment is similar to steps ST1 to ST4 of the start time predicting method according to the first embodiment. Therefore, the description of the start time predicting method according to the second embodiment will be omitted.

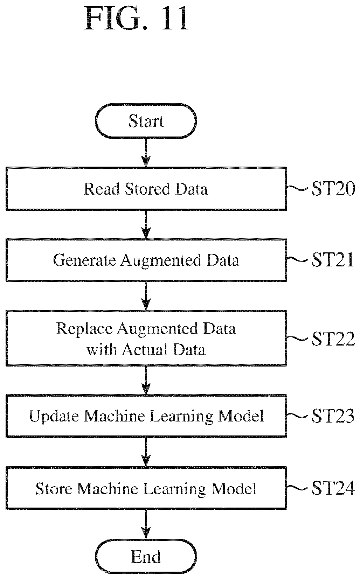

FIG. 11 is a flowchart illustrating an augmented data generating method and a machine learning model updating method in an air conditioning control method according to the second embodiment. Note that steps ST20, ST21, and ST24 of the air conditioning control method by the air conditioning control device 20 according to the second embodiment are similar to steps ST10, ST11, and ST13 of the air conditioning control method described by referring to FIG. 4, respectively. Therefore, the description of steps ST20, ST21, and ST24 will be omitted.

As illustrated in FIG. 11, in step ST22, the replacement unit 22 compares the air conditioning data being the actual data with the augmented data generated by the augmentation unit 14, and replaces the augmented data with the air conditioning data on the basis of a result of the comparison. Next, in step ST23, the update unit 15 updates the machine learning model by referring to the air conditioning data and the augmented data that have gone through step ST22 by the replacement unit 22.

For example, in step ST22, the replacement unit 22 may compare the air conditioning data used by the augmentation unit 14 to generate the augmented data with the augmented data generated by the augmentation unit 14, and replace the augmented data with the air conditioning data on the basis of a result of the comparison. Moreover, in step ST22, the replacement unit 22 may temporarily store, in the storage unit 12, the augmented data that has not been replaced. In that case, as soon as the prediction unit 13 newly acquires air conditioning data later, the replacement unit 22 may compare the air conditioning data with the augmented data stored in the storage unit 12, and replace the augmented data with the air conditioning data on the basis of a result of the comparison. As a result, the period of data collection can be shortened.

Next, a specific example of the augmented data replacing method in step ST22 above will be described.

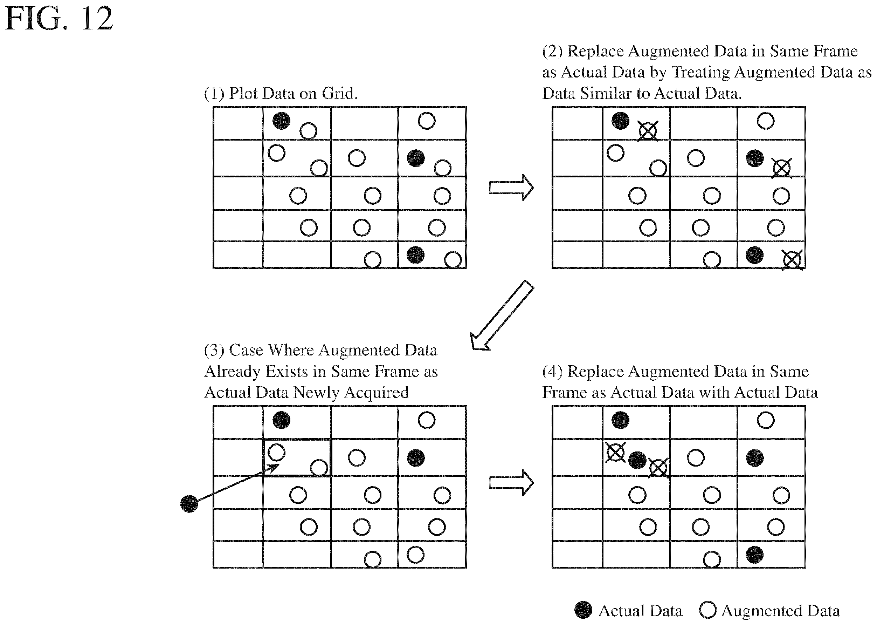

FIG. 12 is a diagram for explaining the specific example of the augmented data replacing method in the air conditioning control method by the air conditioning control device 20 according to the second embodiment. Arrows accompanying four grids illustrated in FIG. 12 indicate the order in which the replacement unit 22 executes the processes of step ST22. In these grids, a vertical axis represents a "difference between the indoor temperature and the target temperature", and a horizontal axis represents a "difference between the indoor temperature and the outdoor temperature". In the present example, the "difference between the indoor temperature and the target temperature" and the "difference between the indoor temperature and the outdoor temperature" make up one record of air conditioning data or augmented data. On these grids, "●" indicates the air conditioning data being the actual data, and "o" indicates the augmented data.

First, in step ST22, as illustrated in (1) of FIG. 12, the replacement unit 22 plots the air conditioning data being the actual data and the augmented data acquired from the augmentation unit 14, on the grid in which the data on the vertical axis and the data on the horizontal axis are defined. Note that in the present specific example, the one record of air conditioning data or augmented data used by the replacement unit 22 is the data including the "difference between the indoor temperature and the target temperature" and the "difference between the indoor temperature and the outdoor temperature", but the data is not limited thereto and may be a numerical value based on an environmental value or a target value. Moreover, when one record of data includes two pieces of data each based on the environmental value or the target value as in the present specific example, the augmentation unit 14 defines a lattice grid having these two pieces of data on the vertical axis and the horizontal axis. Note that the number of dimensions of the air conditioning data and the augmented data used by the replacement unit 22 is not limited to two dimensions. The number of dimensions may be three dimensions, in which case the grid can be a three-axis cubic grid. The replacement unit 22 may augment the number of dimensions of the grid to match with the number of dimensions of the air conditioning data and the augmented data input by the update unit 15 for updating the machine learning model. The replacement unit 22 may change the axis scale that is the grid spacing, depending on the types of the air conditioning data and the augmented data.

Next, as illustrated in (2) of FIG. 12, the replacement unit 22 compares the air conditioning data with the augmented data on the grid, and replaces the augmented data in the same frame as the air conditioning data with the air conditioning data by treating the augmented data as data similar to the air conditioning data. The replacement unit 22 may repeat the processes of (1) and (2) in FIG. 12 as soon as the augmentation unit 14 generates the augmented data.

Next, as illustrated in (3) of FIG. 12, as soon as the prediction unit 13 newly acquires air conditioning data, the replacement unit 22 plots the air conditioning data on the grid.

Then, as illustrated in (4) of FIG. 12, the replacement unit 22 compares the newly plotted air conditioning data with the augmented data, and replaces the augmented data with the air conditioning data when there is already the augmented data in the frame in which the air conditioning data is present.

Note that the replacement unit 22 may repeat the processes illustrated by (3) and (4) of FIG. 12 as soon as new air conditioning data is acquired.

As described above, the air conditioning control device 20 according to the second embodiment further includes the replacement unit that compares the air conditioning data with the augmented data and replaces the augmented data with the air conditioning data on the basis of a result of the comparison.

According to the above configuration, the augmented data is replaced with the air conditioning data being the actual data, and the machine learning model is updated on the basis of the actual data. As a result, the start time of the air conditioner can be predicted with higher accuracy at the early stage of machine learning on the basis of the machine learning model having high reliability, as compared to a case where the augmented data is not replaced with the actual data. As machine learning progresses, a time gap between a predicted start time and an optimum start time for the indoor temperature to reach the target temperature at the target time can be further reduced.

### Third Embodiment.

The first and second embodiments have described that the machine learning model is updated by referring to the air conditioning data, the augmented data, and the predicted required time. In a third embodiment, a neural network model is used as the machine learning model, and the neural network model is updated by further referring to a required time until the time when an environmental value of a room actually reaches a target value.

The third embodiment will be described below by referring to the drawings. Note that in the third embodiment, the air conditioning control device 2 of FIG. 2 described in the first embodiment or the air conditioning control device 20 of FIG. 10 described in the second embodiment can be used. Therefore, the description of the configuration described in the first embodiment or the second embodiment will be omitted. In the description of an air conditioning control method according to the third embodiment, detailed description of a process similar to the process of the air conditioning control method described in the first and second embodiments will be omitted as appropriate.

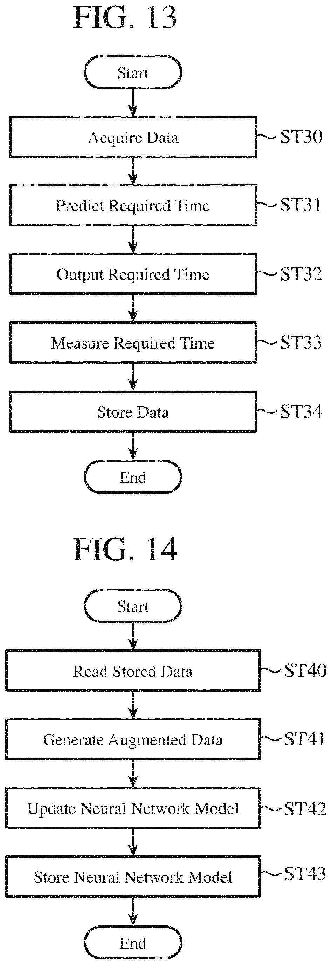

FIG. 13 is a flowchart illustrating a start time predicting method in the air conditioning control method according to the third embodiment. FIG. 14 is a flowchart illustrating an augmented data generating method and a machine learning model updating method in the air conditioning control method according to the third embodiment.

As illustrated in FIG. 13, in step ST30, the prediction unit 13 acquires air conditioning data including the indoor temperature and the outdoor temperature via the transceiver unit 11. The prediction unit 13 also reads a machine learning model including a neural network model from the storage unit 12.

Next, in step ST31, the prediction unit 13 predicts a required time by inputting the air conditioning data into the machine learning model including the neural network model that has been read. Hereinafter, the required time predicted by the prediction unit 13 will also be referred to as a "predicted required time".

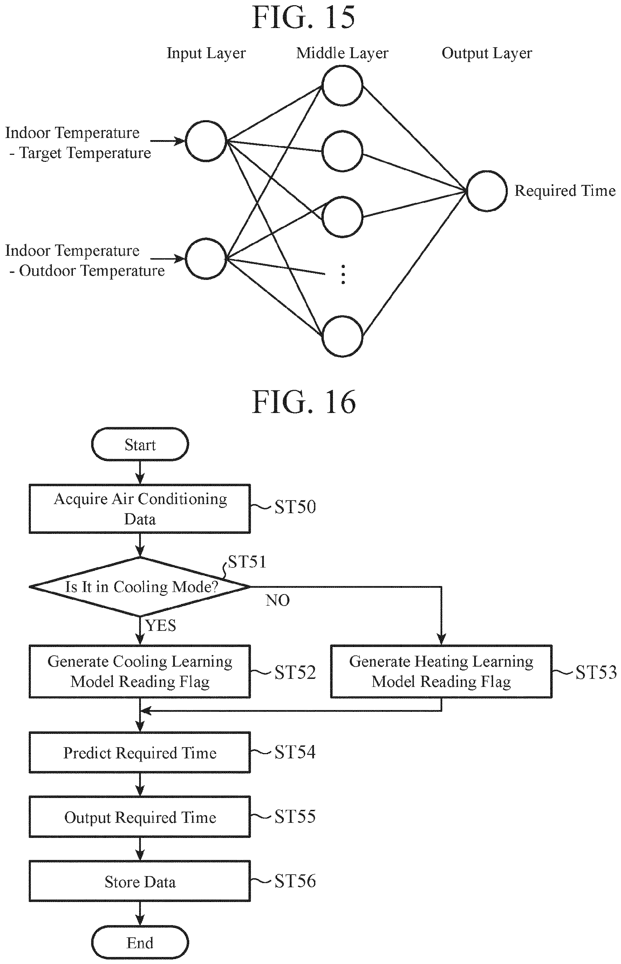

FIG. 15 is a diagram for explaining a specific example in which the prediction unit 13 predicts the required time using the neural network model in step ST31 as above. As illustrated in FIG. 15, the prediction unit 13 inputs a "difference between the indoor temperature and a target temperature" and a "difference between the indoor temperature and the outdoor temperature" into an input layer of the neural network model, and causes an output layer to output the required time.

Next, in step ST32, the prediction unit 13 outputs the predicted required time to the air conditioning controller 3 via the transceiver unit 11. After acquiring the predicted required time, the air conditioning controller 3 determines a start time of the air conditioner 4 required for the indoor temperature of a room to reach the target temperature, from the predicted required time and a target time indicated by the above air conditioning data, and controls the air conditioner 4 to start at the start time.

Next, in step ST33, the sensor of the indoor unit 6 acquires the indoor temperature that changes when the air conditioning controller 3 has controlled the air conditioner 4 to start, and the prediction unit 13 monitors the indoor temperature via the transceiver unit 11 and measures a required time from the start time of the air conditioner 4 to the time when the indoor temperature has actually reached the target temperature (hereinafter referred to as a "measured required time").

Next, in step ST34, the prediction unit 13 stores, in the storage unit 12, the predicted required time, the measured required time, and the air conditioning data in association with one another, the air conditioning data including the indoor temperature and the outdoor temperature in a period from the time when the air conditioning data input into the machine learning model is acquired to the time when the target temperature is reached after the start time.

Next, the flowchart of FIG. 14 will be described.

The acquisition unit 16 reads the predicted required time, the measured required time, and the air conditioning data associated therewith from the storage unit 12 (step ST40).

Next, the augmentation unit 14 generates augmented data, by referring to the predicted required time, the measured required time, and the air conditioning data acquired by the acquisition unit 16 (step ST41).

Next, the update unit 15 reads the machine learning model including the neural network model stored in the storage unit 12 in advance, and updates the machine learning model including the neural network model, by referring to the predicted required time, the measured required time, the air conditioning data, and the augmented data generated by the augmentation unit 14 (step ST42).

The update unit 15 then stores, in the storage unit 12, the updated machine learning model including the neural network model (step ST43).

Each of the prediction unit 13 and the update unit 15 updates the neural network model by repeating each of the above processes. As a result, the accuracy of the required time predicted by the prediction unit 13 can be gradually improved.

Next, a variation of the third embodiment will be described.

The present embodiment described above and the first and second embodiments assume the situation in which only one indoor unit is installed in one room. However, a plurality of indoor units can be installed in one room in the case of air conditioning in an office building or the like. In that case, the indoor temperature is affected by each indoor unit, and the machine learning model used for air conditioning control of each indoor unit is also affected. Thus, the air conditioning control device 2 or the air conditioning control device 20 performs the processes in ST30 to ST34 and the processes in ST40 and ST41 as above, also for air conditioning data that is acquired by a sensor of a different indoor unit 6 installed in the same room as the indoor unit 6 subjected to the air conditioning control by the air conditioning control method described above. Then in step ST42 as above, the update unit 15 may update the machine learning model including the neural network model by further referring to the additional air conditioning data acquired by the sensor of the different indoor unit 6 and augmented data thereof.

As a result, the start time of the air conditioner can be predicted in consideration of the influence of the two indoor units installed in the same room so that, even when a plurality of indoor units is installed in one room in an office building or the like, the start time of the air conditioner required for the indoor temperature to reach the target temperature at the target time can be predicted with higher accuracy than when the influence of another indoor unit is not considered.

As described above, in the air conditioning control device according to the third embodiment, the machine learning model is the machine learning model including the neural network model, and the update unit 15 updates the machine learning model including the neural network model, by further referring to the required time until the time when the environmental value of the room equipped with the air conditioner actually reaches the target value from the start time.

According to the above configuration, the machine learning model including the neural network model is updated using the air conditioning data and the augmented data, and the start time of the air conditioner is predicted on the basis of the machine learning model including the neural network model. The accuracy of predicting the start time of the air conditioner can be gradually improved by repeatedly updating the machine learning model including the neural network model.

In the air conditioning control device according to one aspect of the third embodiment, the acquisition unit 16 may further acquire additional air conditioning data from another indoor unit 6 further installed in the room in which the indoor unit 6 of the air conditioner 4 is installed, and the update unit 15 may update the machine learning model by further referring to the additional air conditioning data.

According to the above configuration, even when a plurality of indoor units is installed in one room, the start time of the air conditioner can be predicted with higher accuracy than when the influence of another indoor unit is not considered.

### Fourth Embodiment.

When the air conditioner executes the heating mode, a change in the temperature change graph of the indoor temperature is larger than when the cooling mode is executed, so that it is difficult for a single learning model to predict the required time when the air conditioner executes the heating mode and the required time when the air conditioner executes the cooling mode. A main purpose of a fourth embodiment is to solve such a problem.

The fourth embodiment will be described below by referring to the drawings. Note that in the fourth embodiment, the air conditioning control device 2 of FIG. 2 described in the first embodiment or the air conditioning control device 20 of FIG. 10 described in the second embodiment can be used. Therefore, the description of a configuration similar to the configuration described in the first embodiment or the second embodiment will be omitted.

When the operation mode of the air conditioner 4 is the cooling mode, the prediction unit 13 in the fourth embodiment predicts the start time by referring to a machine learning model for cooling as the machine learning model. Further, when the operation mode of the air conditioner 4 is the heating mode, the prediction unit 13 predicts the start time by referring to a machine learning model for heating.

The update unit 15 in the fourth embodiment updates the machine learning model for cooling, by referring to air conditioning data and augmented data for cooling and the corresponding start time. Similarly, the update unit 15 updates the machine learning model for heating, by referring to air conditioning data and augmented data for heating and the corresponding start time.

Next, an air conditioning control method according to the fourth embodiment will be described by referring to the drawings. Note that in the description of the air conditioning control method according to the fourth embodiment, detailed description of a process similar to the process of the air conditioning control method described in the first and second embodiments will be omitted as appropriate.

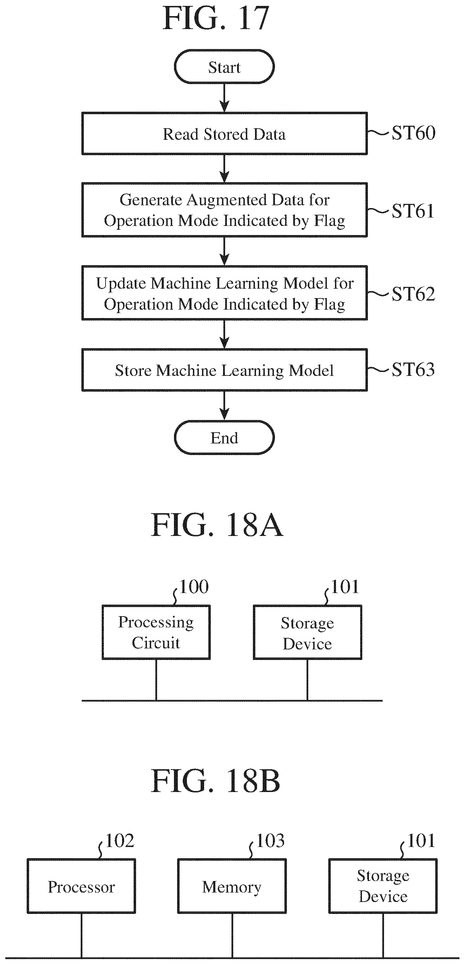

FIG. 16 is a flowchart illustrating a start time predicting method in the air conditioning control method according to the fourth embodiment. FIG. 17 is a flowchart illustrating an augmented data generating method and a machine learning model updating method in the air conditioning control method according to the fourth embodiment.

As illustrated in FIG. 16, the prediction unit 13 acquires air conditioning data via the transceiver unit 11 (step ST50). Next, the prediction unit 13 determines whether or not the operation mode of the air conditioner 4 is the cooling mode by referring to the acquired air conditioning data (step ST51). The prediction unit 13 advances the processing to step ST52 if having determined that the operation mode of the air conditioner 4 is the cooling mode. The prediction unit 13 advances the processing to step ST53 if having determined that the operation mode of the air conditioner 4 is not the cooling mode.

In step ST52, the prediction unit 13 generates a cooling learning model reading flag that instructs the prediction unit 13 to read a cooling learning model. In step ST53, the prediction unit 13 generates a heating learning model reading flag that instructs the prediction unit 13 to read a heating learning model.

As a step following step ST52 or step ST53, the prediction unit 13 reads, from the storage unit 12, a machine learning model for the operation mode indicated by the generated flag, inputs the air conditioning data into the machine learning model, and predicts a required time (step ST54). The prediction unit 13 then outputs the predicted required time to the air conditioning controller 3 via the transceiver unit 11.

Next, the prediction unit 13 outputs the predicted required time predicted to the air conditioning controller 3 via the transceiver unit 11 (step ST55). After acquiring the required time, the air conditioning controller 3 determines a start time of the air conditioner 4 required for an environmental value of a room to reach a target value, from the required time predicted by the prediction unit 13 and a target time indicated by the air conditioning data, and controls the air conditioner 4 to start at the start time.

Next, the prediction unit 13 stores, in the storage unit 12, the start time determined by the air conditioning controller 3, the air conditioning data, and the cooling learning model reading flag generated in step ST52 or the heating learning model reading flag generated in step ST53 in association with one another, the air conditioning data corresponding to a period from the time when the air conditioning data input into the machine learning model is acquired to the time when the target temperature is reached after the start time (step ST56).

Next, the flowchart of FIG. 17 will be described.

The acquisition unit 16 reads the air conditioning data, the start time, and the heating learning model reading flag or the cooling learning model reading flag that are stored in the storage unit 12 by the prediction unit 13 in step ST56 as above (step ST60).

Next, the augmentation unit 14 generates augmented data for the operation mode indicated by the flag, by referring to the air conditioning data, the start time, and the heating learning model reading flag or the cooling learning model reading flag acquired by the acquisition unit 16 (step ST61). The augmentation unit 14 then outputs the generated augmented data to the update unit 15.

Next, the update unit 15 reads the machine learning model for the operation mode indicated by the flag, and updates the machine learning model, by referring to the air conditioning data being the actual data and the start time acquired by the acquisition unit 16 as well as the augmented data generated by the augmentation unit 14 (step ST62).

The update unit 15 then stores, in the storage unit 12, the machine learning model for heating or machine learning model for cooling that has been updated (step ST63).

As described above, the update unit 15 in the air conditioning control device according to the fourth embodiment updates the machine learning model for cooling by referring to the air conditioning data and augmented data for cooling and the start time, or updates the machine learning model for heating by referring to the air conditioning data and augmented data for heating and the start time.

According to the above configuration, even in situations where the temperature changes completely differently such as during cooling and heating, the required time can be predicted with higher accuracy than when the machine learning model for heating or the machine learning model for cooling is not used.

### Fifth Embodiment.

The function of each of the prediction unit 13, the augmentation unit 14, the update unit 15, and the acquisition unit 16 of the control unit 10 in the air conditioning control device 2 is implemented by a processing circuit. That is, the air conditioning control device 2 includes a processing circuit for executing the processing from step ST1 to step ST4 illustrated in FIG. 3, the processing from step ST10 to step ST13 illustrated in FIG. 4, the processing from step ST30 to step ST34 illustrated in FIG. 13, the processing from step ST40 to step ST43 illustrated in FIG. 14, the processing from step ST50 to step ST56 illustrated in FIG. 16, or the processing from step ST60 to step ST63 illustrated in FIG. 17. Similarly, the function of each of the prediction unit 13, the augmentation unit 14, the update unit 15, the acquisition unit 16, and the replacement unit 22 of the control unit 21 in the air conditioning control device 20 is implemented by a processing circuit. That is, the air conditioning control device 20 includes a processing circuit for executing the processing from step ST20 to step ST24 illustrated in FIG. 11. These processing circuits may each be dedicated hardware or a central processing unit (CPU) that executes programs stored in a memory.

FIG. 18A is a block diagram illustrating a configuration of hardware that implements the function of the air conditioning control device 2 or the air conditioning control device 20. FIG. 18B is a block diagram illustrating a configuration of hardware that executes software for implementing the functions of the air conditioning control device 2 or the air conditioning control device 20. A storage device 101 illustrated in FIGS. 18A and 18B functions as the storage unit 12. Note that the storage device 101 may be a component included in the air conditioning control device 2 or the air conditioning control device 20, or may be included in a device separate from the air conditioning control device. For example, the storage device 101 may be a device on a communication network to which the air conditioning control device 2 or the air conditioning control device 20 can have communication access.

When the above processing circuit is a processing circuit 100 as the dedicated hardware illustrated in FIG. 18A, the processing circuit 100 corresponds to, for example, a single circuit, a complex circuit, a programmed processor, a parallel-programmed processor, an application specific integrated circuit (ASIC), a field-programmable gate array (FPGA), or a combination of those.

In the air conditioning control device 2, the functions of the prediction unit 13, the augmentation unit 14, the update unit 15, and the acquisition unit 16 may be implemented by separate processing circuits, or may be implemented collectively by one processing circuit. In the air conditioning control device 20, the functions of the prediction unit 13, the augmentation unit 14, the update unit 15, the acquisition unit 16, and the replacement unit 22 may be implemented by separate processing circuits, or may be implemented collectively by one processing circuit.

When the processing circuit is a processor 102 illustrated in FIG. 18B, the functions of the prediction unit 13, the augmentation unit 14, the update unit 15, and the acquisition unit 16 in the air conditioning control device 2 are each implemented by software, firmware, or a combination of software and firmware.

Likewise, the functions of the prediction unit 13, the augmentation unit 14, the update unit 15, the acquisition unit 16, and the replacement unit 22 in the air conditioning control device 20 are each implemented by software, firmware, or a combination of software and firmware. Note that the software or firmware is described as programs and stored in a memory 103.

The processor 102 reads and executes the programs stored in the memory 103, thereby implementing the function of each of the prediction unit 13, the augmentation unit 14, the update unit 15, and the acquisition unit 16 in the air conditioning control device 2. That is, the air conditioning control device 2 includes the memory 103 for storing the programs that, when executed by the processor 102, result in the execution of the processing from step ST1 to step ST4 illustrated in FIG. 3, the processing from step ST10 to step ST13 illustrated in FIG. 4, the processing from step ST30 to step ST34 illustrated in FIG. 13, the processing from step ST40 to step ST43 illustrated in FIG. 14, the processing from step ST50 to step ST56 illustrated in FIG. 16, or the processing from step ST60 to step ST63 illustrated in FIG. 17.

Those programs cause a computer to execute the procedures or methods related to the prediction unit 13, the augmentation unit 14, the update unit 15, and the acquisition unit 16. The memory 103 may be a computer-readable storage medium that stores the programs for causing a computer to function as the prediction unit 13, the augmentation unit 14, the update unit 15, and the acquisition unit 16. The similar way applies to the air conditioning control device 20.

The memory 103 corresponds to, for example, a non-volatile or volatile semiconductor memory such as a random access memory (RAM), a read only memory (ROM), a flash memory, an erasable programmable read only memory (EPROM), or an electrically-EPROM (EEPROM), a magnetic disk, a flexible disk, an optical disc, a compact disc, a mini disc, a DVD, or the like.

The functions of the prediction unit 13, the augmentation unit 14, the update unit 15, and the acquisition unit 16 may be implemented partly by dedicated hardware and partly by software or firmware.

For example, the function of the prediction unit 13 is implemented by the processing circuit as dedicated hardware. The functions of the augmentation unit 14 and the update unit 15 may be implemented by the processor 102 reading and executing the programs stored in the memory 103.

The similar way applies to the prediction unit 13, the augmentation unit 14, the update unit 15, the acquisition unit 16, and the replacement unit 22 in the air conditioning control device 20.

As described above, the processing circuit can implement each of the above functions by hardware, software, firmware, or a combination thereof.

### INDUSTRIAL APPLICABILITY

The air conditioning control device according to the present invention can reduce the temporal cost for collecting data used in machine learning, and can thus be used as an air conditioning control device that controls an air conditioner on the basis of machine learning.

### REFERENCE SIGNS LIST

1: air conditioning control system, 2: air conditioning control device, 3: air conditioning controller, 4: air conditioner, 5: outdoor unit, 6: indoor unit, 10: control unit, 11: transceiver unit, 12: storage unit, 13: prediction unit, 14: augmentation unit, 15: update unit, 16: acquisition unit, 17: machine learning unit, 20: air conditioning control device, 21: control unit, 22: replacement unit, 23: machine learning unit, 100: processing circuit, 101: storage device, 102: processor, 103: memory

## Claims

1. An air conditioning control device (2, 20) comprising:
an acquisition unit (16) for acquiring air conditioning data acquired by an air conditioner (4), and a start time of the air conditioner predicted by inputting the air conditioning data into a machine learning model;
**characterized by** the air conditioning control device (2, 20) further comprising:
an augmentation unit (14) for generating augmented data by referring to the air conditioning data and the start time acquired by the acquisition unit; and
an update unit (15) for updating the machine learning model, by referring to the air conditioning data and the start time acquired by the acquisition unit as well as the augmented data generated by the augmentation unit, wherein
the augmentation unit refers to air conditioning data for a period from the start time to a time when an environmental value of a room equipped with the air conditioner reaches a target value, treats a certain time within the period as a virtual start time, and treats the air conditioning data at the certain time as the air conditioning data at the virtual start time, thereby generating augmented data of the air conditioning data corresponding to the start time.

2. The air conditioning control device according to claim 1, wherein the acquisition unit acquires, as the air conditioning data, at least an indoor temperature of the room in which an indoor unit (6) of the air conditioner is installed, and acquires, as the start time, a start time predicted as a start time required for the indoor temperature to reach a target temperature at a target time.

3. The air conditioning control device according to claim 1, further comprising a replacement unit (22) for comparing the air conditioning data with the augmented data and replacing the augmented data with the air conditioning data on a basis of a result of the comparison.

4. The air conditioning control device according to claim 1, wherein
the machine learning model is a machine learning model including a neural network model, and
the update unit updates the machine learning model including the neural network model, by further referring to a required time until a time when an environmental value of the room equipped with the air conditioner actually reaches a target value from the start time.

5. The air conditioning control device according to claim 1, wherein the update unit updates a machine learning model for cooling by referring to air conditioning data and augmented data for cooling and the start time, or updates a machine learning model for heating by referring to air conditioning data and augmented data for heating and the start time.

6. The air conditioning control device according to claim 1, further comprising a prediction unit (13) for predicting a start time of the air conditioner by inputting the air conditioning data into the machine learning model, wherein
the air conditioner is caused to start at the start time predicted by the prediction unit.

7. An air conditioning control method comprising:
an acquisition step of acquiring air conditioning data acquired by an air conditioner (4), and a start time of the air conditioner predicted by inputting the air conditioning data into a machine learning model;
**characterized by** the air conditioning control method further comprising:
an augmentation step of generating augmented data by referring to the air conditioning data and the start time acquired in the acquisition step; and
an update step of updating the machine learning model, by referring to the air conditioning data and the start time acquired in the acquisition step as well as the augmented data generated in the augmentation step, wherein
the augmentation step includes referring to air conditioning data for a period from the start time to a time when an environmental value of a room equipped with the air conditioner reaches a target value, treating a certain time within the period as a virtual start time, and treating the air conditioning data at the certain time as the air conditioning data at the virtual start time, thereby generating augmented data of the air conditioning data corresponding to the start time.

## Patentansprüche

1. Klimatisierungssteuerungseinrichtung (2, 20), aufweisend:
eine Erwerbungseinheit (16) zum Erfassen von Klimatisierungsdaten, die von einer Klimaanlage (4) erworben werden, und einer Startzeit der Klimaanlage, die durch Eingeben der Klimatisierungsdaten in ein maschinelles Lernmodell vorhergesagt wird;
**dadurch gekennzeichnet, dass** die Klimatisierungssteuerungseinrichtung (2, 20) weiter aufweist:
eine Augmentierungseinheit (14) zum Generieren augmentierter Daten durch Bezugnehmen auf die von der Erwerbungseinheit erworbenen Klimatisierungsdaten und Startzeit; und
eine Aktualisierungseinheit (15) zum Aktualisieren des maschinellen Lernmodells durch Bezugnehmen auf die von der Erwerbungseinheit erworbenen Klimatisierungsdaten und Startzeit sowie die von der Augmentierungseinheit generierten augmentierten Daten, wobei
die Augmentierungseinheit sich auf Klimatisierungsdaten für einen Zeitraum von der Startzeit bis zu einem Zeitpunkt, zu dem ein Umgebungswert eines mit der Klimaanlage ausgestatteten Raums einen Zielwert erreicht, bezieht, und einen bestimmten Zeitpunkt innerhalb des Zeitraums als eine virtuelle Startzeit behandelt, und die Klimatisierungsdaten zu dem bestimmten Zeitpunkt als die Klimatisierungsdaten zu der virtuellen Startzeit behandelt, wodurch augmentierte Daten der Klimatisierungsdaten entsprechend der Startzeit generiert werden.

2. Klimatisierungssteuerungseinrichtung nach Anspruch 1 wobei die Erwerbungseinheit als die Klimatisierungsdaten zumindest eine Innentemperatur des Raums erwirbt, in dem eine Inneneinheit (6) der Klimaanlage installiert ist, und als die Startzeit eine Startzeit erwirbt, die als eine Startzeit vorhergesagt wird, die erforderlich ist, damit die Innentemperatur eine Zieltemperatur zu einer Zielzeit erreicht.

3. Klimatisierungssteuerungseinrichtung nach Anspruch 1 ferner aufweisend eine Ersetzungseinheit (22) zum Vergleichen der Klimatisierungsdaten mit den augmentierten Daten und zum Ersetzen der augmentierten Daten durch die Klimatisierungsdaten auf der Grundlage eines Ergebnisses des Vergleichs.

4. Klimatisierungssteuerungseinrichtung nach Anspruch 1, wobei
das maschinelle Lernmodell ein maschinelles Lernmodell ist, das ein neuronales Netzwerkmodell aufweist, und
die Aktualisierungseinheit das maschinelle Lernmodell einschließlich des neuronalen Netzwerkmodells aktualisiert, durch weiteres Bezugnehmen auf eine erforderliche Zeit bis zu einem Zeitpunkt, zu dem ein Umgebungswert des mit der Klimaanlage ausgestatteten Raums tatsächlich einen Zielwert ab der Startzeit erreicht.

5. Klimatisierungssteuerungseinrichtung nach Anspruch 1, wobei die Aktualisierungseinheit ein maschinelles Lernmodell für die Kühlung durch Bezugnehmen auf Klimatisierungsdaten und augmentierte Daten für Kühlung und die Startzeit aktualisiert, oder ein maschinelles Lernmodell für Erwärmung durch Bezugnehmen auf Klimatisierungsdaten und augmentierte Daten für Erwärmung und die Startzeit aktualisiert.

6. Klimatisierungssteuerungseinrichtung nach Anspruch 1, ferner aufweisend eine Vorhersageeinheit (13) zum Vorhersagen einer Startzeit der Klimaanlage durch Eingeben der Klimatisierungsdaten in das maschinelle Lernmodell, wobei
die Klimaanlage veranlasst wird, zu der von der Vorhersageeinheit vorhergesagten Startzeit zu starten.

7. Klimatisierungssteuerungsverfahren, aufweisend:
einen Erwerbungsschritt des Erwerbens von Klimatisierungsdaten, die von einer Klimaanlage (4) erworben werden, und einer Startzeit der Klimaanlage, die durch Eingeben der Klimatisierungsdaten in ein maschinelles Lernmodell vorhergesagt wird;
**dadurch gekennzeichnet, dass** das Klimatisierungssteuerungsverfahren weiter aufweist:
einen Augmentierungsschritt des Generierens von augmentierten Daten durch Bezugnehmen auf die in dem Erwerbungsschritt erworbenen Klimatisierungsdaten und Startzeit; und
einen Aktualisierungsschritt des Aktualisierens des maschinellen Lernmodells durch Bezugnehmen auf die in dem Erwerbungsschritt erworbenen Klimatisierungsdaten und Startzeit sowie die in dem Augmentierungsschritt generierten augmentierten Daten, wobei
der Augmentierungsschritt das Beziehen auf Klimatisierungsdaten für eine Periode von der Startzeit bis zu einer Zeit, zu der ein Umgebungswert eines mit der Klimaanlage ausgestatteten Raums einen Zielwert erreicht, das Behandeln einer bestimmten Zeit innerhalb der Periode als eine virtuelle Startzeit und das Behandeln der Klimatisierungsdaten zu der bestimmten Zeit als die Klimatisierungsdaten zu der virtuellen Startzeit umfasst, wodurch erweiterte Daten der Klimatisierungsdaten entsprechend der Startzeit erzeugt werden.

## Revendications

1. Dispositif de commande de climatisation (2, 20) comprenant :
une unité d'acquisition (16) destinée à acquérir des données de climatisation acquises par un climatiseur (4), et une heure de démarrage du climatiseur prédite en entrant les données de climatisation dans un modèle d'apprentissage automatique ;
**caractérisé en ce que** le dispositif de commande de climatisation (2, 20) comprend en outre :
une unité d'augmentation (14) destinée à générer des données augmentées en se référant aux données de climatisation et à l'heure de démarrage acquises par l'unité d'acquisition ; et
une unité de mise à jour (15) destinée à mettre à jour le modèle d'apprentissage automatique, en se référant aux données de climatisation et à l'heure de démarrage acquises par l'unité d'acquisition, ainsi qu'aux données augmentées générées par l'unité d'augmentation, dans laquelle
l'unité d'augmentation se réfère à des données de climatisation pour une période allant de l'heure de démarrage à une heure à laquelle une valeur environnementale d'une pièce équipée du climatiseur atteint une valeur cible, traite une certaine heure dans la période comme une heure de démarrage virtuelle, et traite les données de climatisation d'air à l'heure donnée comme les données de climatisation à l'heure de démarrage virtuelle, générant ainsi des données augmentées des données de climatisation correspondant à l'heure de démarrage.

2. Dispositif de commande de climatisation selon la revendication 1, dans lequel l'unité d'acquisition acquiert, en tant que données de climatisation, au moins une température intérieure de la pièce dans laquelle une unité intérieure (6) du climatiseur est installée, et acquiert, en tant qu'heure de démarrage, une heure de démarrage prédite comme une heure de démarrage nécessaire pour que la température intérieure atteigne une température cible à une heure cible.

3. Dispositif de commande de climatisation selon la revendication 1, comprenant en outre une unité de remplacement (22) destinée à comparer les données de climatisation aux données augmentées et à remplacer les données augmentées par les données de climatisation sur la base d'un résultat de la comparaison.

4. Dispositif de commande de climatisation selon la revendication 1, dans lequel
le modèle d'apprentissage automatique est un modèle d'apprentissage automatique comprenant un modèle de réseau neuronal, et
l'unité de mise à jour met à jour le modèle d'apprentissage automatique comprenant le modèle de réseau neuronal, en se référant en outre à une heure requise jusqu'à une heure à laquelle une valeur environnementale de la pièce équipée du climatiseur atteint effectivement une valeur cible à partir de l'heure de démarrage.

5. Dispositif de commande de climatisation selon la revendication 1, dans lequel l'unité de mise à jour met à jour un modèle d'apprentissage automatique pour le refroidissement en se référant à des données de climatisation et à des données augmentées pour le refroidissement et l'heure de démarrage, ou met à jour un modèle d'apprentissage automatique pour le chauffage en se référant à des données de climatisation et à des données augmentées pour le chauffage et l'heure de démarrage.

6. Dispositif de commande de climatisation selon la revendication 1, comprenant en outre une unité de prédiction (13) destinée à prédire une heure de démarrage du climatiseur en entrant les données de climatisation dans le modèle d'apprentissage automatique, dans lequel
le climatiseur est amené à démarrer à l'heure de démarrage prédite par l'unité de prédiction.

7. Procédé de commande de climatisation comprenant :
une étape d'acquisition consistant à acquérir des données de climatisation acquises par un climatiseur (4), et une heure de démarrage du climatiseur prédite en entrant les données de climatisation dans un modèle d'apprentissage automatique ;
**caractérisé en ce que** le procédé de commande de la climatisation comprend en outre :
une étape d'augmentation consistant à générer des données augmentées en se référant aux données de climatisation et à l'heure de démarrage acquises dans l'étape d'acquisition ; et
une étape de mise à jour consistant à mettre à jour le modèle d'apprentissage automatique, en se référant aux données de climatisation et à l'heure de démarrage acquises dans l'étape d'acquisition, ainsi qu'aux données augmentées générées dans l'étape d'augmentation, dans lequel
l'étape d'augmentation comprend la référence à des données de climatisation pour une période allant de l'heure de démarrage à une heure à laquelle une valeur environnementale d'une pièce équipée du climatiseur atteint une valeur cible, le traitement d'une certaine heure dans la période comme une heure de démarrage virtuel, et le traitement des données de climatisation à la certaine heure comme les données de climatisation à l'heure de démarrage virtuel, générant ainsi des données augmentées des données de climatisation correspondant à l'heure de démarrage.
